# EUROPEAN PATENT APPLICATION

(11) **EP 1 394 783 A2**
(43) Date of publication of application: **03.03.2004**
(21) Application number: 03253671.6
(22) Date of filing: 11.06.2003
(51) Int. Cl.: G11B 7/09, G11B 7/095

(54) **Objective lens driving apparatus for optical pickup**

(30) Priority: 24.08.2002 KR 2002050305
(71) Applicant: SAMSUNG ELECTRONICS CO., LTD., Suwon-City, Kyungki-do (KR)
(72) Inventor: Cheong, Young-min, Dobong-gu, Seoul (KR); Kim, Kwang, Suwon-si, Gyeonggi-do (KR); Kim, Dae-hwan, Gangnam-gu, Seoul (KR); Lee, Jin-won, Bundang-gu, Seongnam-si, Gyeonggi-do (KR)
(74) Representative: Chugg, David John

(57) **Abstract**

An objective lens driving apparatus for an optical pickup includes a base (100), a holder (110) provided on the base (100), a blade (120) on which an objective lens (130) is mounted, an elastic support body (140) elastically supporting the blade (120) capable of moving with respect to the holder (110), a pair of magnetic members (150) installed on the base (100) to face each other, and a coil assembly (160) including a focus coil (161), a tracking coil (163), and a tilt coil (162) and installed at the blade (120) so as to be disposed between the magnetic members (150). Thus, since coils needed to change the position of an objective lens (130) are incorporated into a single coil assembly (160) and arranged between a pair of magnets (150), an installation space is small so that the apparatus can be made compact. Also, the control sensitivity can be improved by extending an effective length of a coil by appropriately matching the magnet polarized into two poles and the coil assembly.

## Description

The present invention relates to an objective lens driving apparatus for an optical pickup.

In general, disk drives record or reproduce information on or from a disk, a recording medium, by emitting light thereon. The disk drive includes a turntable on which a disk is placed, a spindle motor rotating the turntable, and an optical pickup emitting light on a recording surface of the disk to perform recording and reproduction.

However, the light emitted from the optical pickup must be perpendicularly incident on the recording surface of the disk to form an accurate light spot. If the incident direction of light is inclined, an accurate light spot cannot be formed on the disk. Then, an error is generated in recording and reproduction of data. Thus, in order to form an accurate light spot on a desired track of a disk, the light needs to be perpendicularly incident on the recording surface of the disk. Adjusting the light to be perpendicularly incident on the recording surface of the disk is referred to as tilt adjustment or skew adjustment. Typically, an objective lens driving apparatus controls the position of an objective lens in a focusing direction and a tracking direction so that the focus of light can be accurately formed on a desired track of the recording surface of the disk. However, the objective lens driving apparatus maintains the focus of a light spot by maintaining a constant distance between the objective lens and the recording surface of the disk and controls the light spot to follow a desired track, but it does not directly control an incident angle of the light with respect to the recording surface of the disk. Thus, for more precise recording and reproduction, a function of dynamically adjusting the tilt is needed.

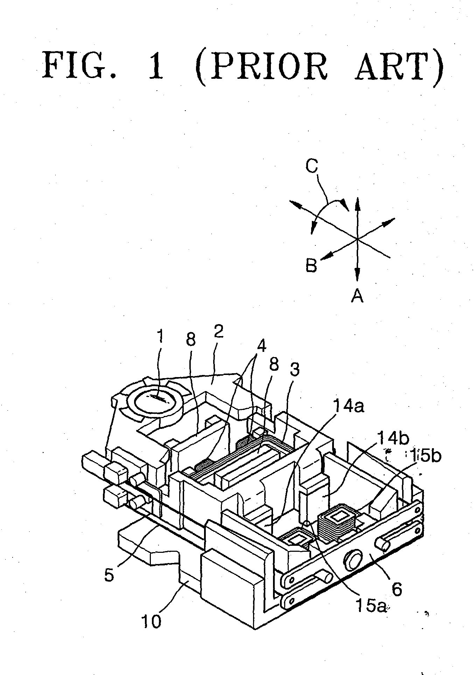

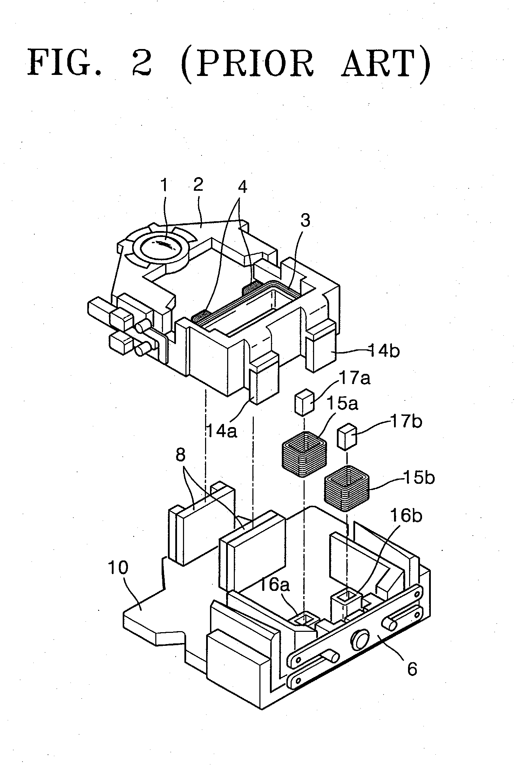

To meet the above need, as shown in Figures 1 and 2, a conventional objective lens driving apparatus of an optical pickup having a dynamic tilt adjustment mechanism has been suggested. The optical pickup shown in the drawing is an objective lens driving mechanism which includes a focus and tracking adjustment mechanism driving a blade 2 where an objective lens 1 is mounted in a focus direction A and a tracking direction B, and a tilt adjustment mechanism driving the blade 2 in a tilt direction C.

The focus and tracking adjustment mechanism has a typical structure including a focus coil 3, a tracking coil 4, and a magnet 8. Thus, the focus and tracking adjustment mechanism generates an electromagnetic force for driving the blade 2 by controlling currents flowing through the focus coil 3 and the tracking coil 4. Reference numeral 5 denotes a wire supporting the blade 2 to move with respect to the holder 6.

The tilt adjustment mechanism includes steel wires 17a and 17b inserted in bosses 16a and 16b on a base 10, tilt coils 15a and 15b wound around the bosses 16a and 16b, and tilt magnets 14a and 14b installed at the blade 2 to face the steel wires 17a and 17b. Thus, the steel wires 17a and 17b are magnetized according to the direction of current flowing in the tilt coils 15a and 15b. The blade 2 is driven in the tilt direction C by the magnetic operation between the magnetized steel wires 17a and 17b and the tilt magnets 14a and 14b.

In the above structure, since constituent elements of the tilt adjustment mechanism, such as the tilt coils 15a and 15b, are installed in an additional space on the base 10, separated from the space for the focus and tracking adjustment mechanism, it is difficult to make a compact objective lens driving apparatus. Also, since the tilt magnets 14a and 14b which are relatively heavy bodies are installed on the blade 2 which is a driving portion, a response speed is reduced due to the heavy weight of the driving portion. Therefore, a structure which can perform accurate lens driving control and tilt control between the disk and the optical pickup is needed.

With a view to solve or reduce the above and other problems, the present invention provides an objective lens driving apparatus of an optical pickup which can smoothly control driving of an objective lens without increasing the size of the apparatus or the weight of a driving portion.

According to the present invention there is provided an apparatus and method as set forth in the appended claims. Preferred features of the invention will be apparent from the dependent claims, and the description which follows.

According to an aspect of the present invention there is provided, an objective lens driving apparatus for an optical pickup comprising a base, a holder provided on the base, a blade on which an objective lens is mounted, an elastic support body elastically supporting the blade capable of moving with respect to the holder, a pair of magnetic members installed on the base to face each other, and a coil assembly including a focus coil, a tracking coil, and a tilt coil and installed at the blade so as to be disposed between the magnetic members.

For a better understanding of the invention, and to show how embodiments of the same may be carried into effect, reference will now be made, by way of example, to the accompanying diagrammatic drawings in which:
Figure 1 is a perspective view illustrating a conventional objective lens driving apparatus;
Figure 2 is an exploded perspective view illustrating the objective lens driving apparatus of Figure 1;
Figure 3 is a perspective view illustrating an objective lens driving apparatus according to a preferred embodiment of the present invention;
Figure 4 is an exploded perspective view illustrating the objective lens driving apparatus of Figure 3;
Figure 5 is a view for explaining driving of the objective lens driving apparatus of Figure 3 in a focusing direction;
Figure 6 is a view for explaining driving of the objective lens driving apparatus of Figure 3 in a tilt direction;
Figure 7 is a view for explaining driving of the objective lens driving apparatus of Figure 3 in a tracking direction;
Figure 8 is a perspective view illustrating an example of a coil assembly in the objective lens driving apparatus of Figure 3; and
Figures 9A through 10B are views illustrating examples of a top cover in the objective lens driving apparatus of Figure 3.

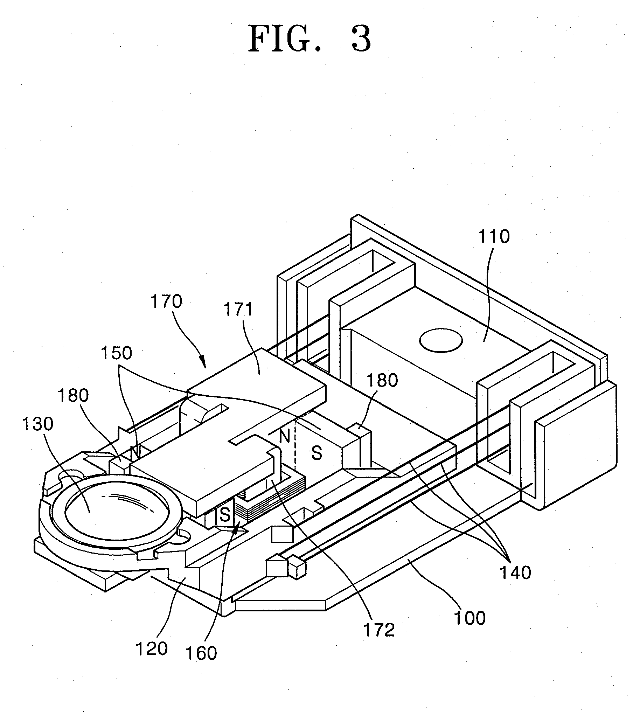

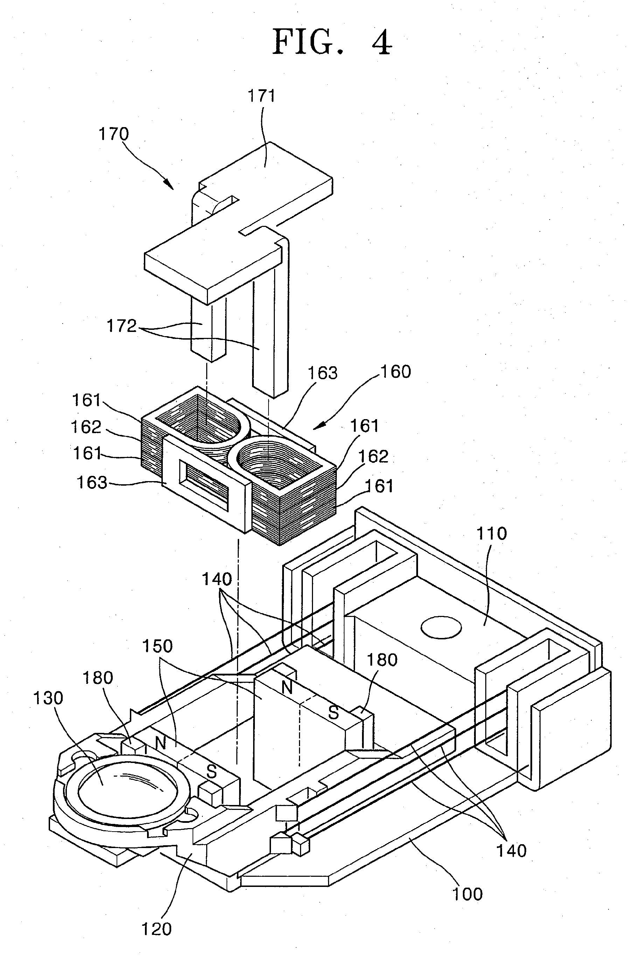

Referring to Figures 3 and 4, a holder 110 is provided on a base 100. A blade 120 on which an objective lens 130 is mounted is supported by a plurality of wires 140 capable of elastically moving with respect to the holder 110. A pair of outer yokes 180 are installed on the base 100 and a pair of magnets 150 are installed at the outer yokes 180 to face each other. A coil assembly 160 is installed at the center portion of weight of the blade 120 and is arranged between the magnets 150.

Each of the magnets 150 is polarized into two poles. The magnets 150 are installed such that the same poles of the magnets 150 face each other. The coil assembly 160 disposed between the magnets 150 includes a tilt coil 162 and a focus coil 161 which are vertically deposited and a tracking coil 163 attached to each of side surfaces of the tilt coil 162 and the focus coil 161 to face the magnets 150. That is, unlike conventional coils which are dispersedly arranged, the coils are incorporated into one coil assembly 160 and arranged between the magnets 150 so that an installation space can be reduced.

Also, a top cover 170 is provided which includes a top yoke 171 magnetically connecting the outer yokes 180 by contacting top ends of the outer yokes 180 from the upper portion of the coil assembly 160, and an inner yoke 172 extending from the top yoke 171 to penetrate the center of the deposited focus coil 161 and the tilt coil 162 and coupled to the base 100. The top cover 170 has a function to concentrate lines of magnetic force generated between the magnets 150 toward the coil assembly 160.

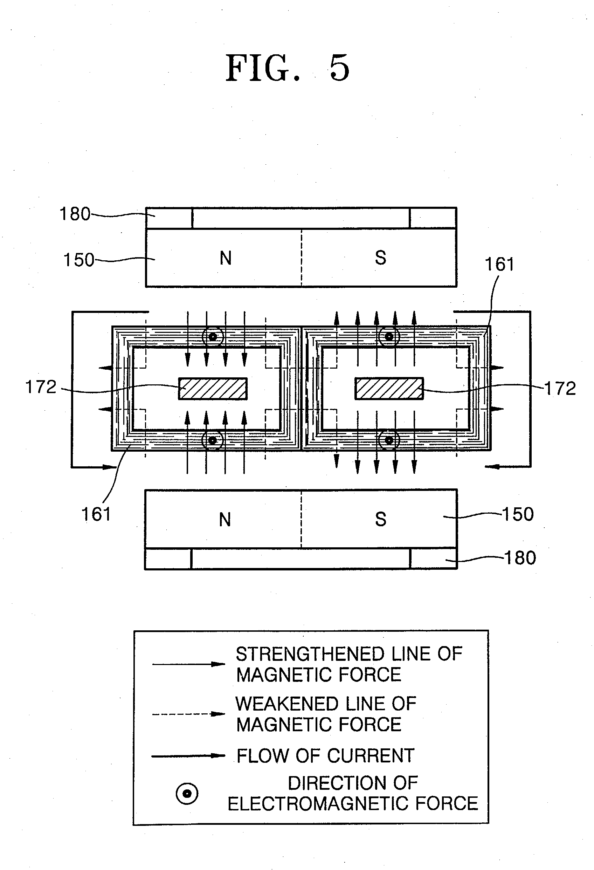

In the above structure, it is assumed that the blade 120 is driven in the focus direction. For example, when current flows through the focus coil 161 as shown in Figure 5, an electromagnetic force is generated in an ascending direction by the interaction with lines of magnetic force generated by the magnets 150. Of course, if the current flows in the opposite direction, the electromagnetic force is generated in the opposite direction. However, in the present invention, an effective length of the focus coil 161 contributing to the generation of the electromagnetic force is double the effective length in the conventional technology. That is, in the conventional structure shown in Figure 1, since only one side of the focus coil 3 is disposed between the magnets 8, the current flowing on the other side is not used for control. In contrast, in the structure according to the present invention, since the entire coil assembly 160 is disposed between the magnets 150 which are polarized into two poles, the front and rear sides of the focus coil 161 facing the respective magnets 150 act as effective coils, as shown in Figure 5. Thus, when the same current is provided, a quite high control sensitivity can be obtained. In addition, since the inner yoke 172 of the top cover 170 concentrates the lines of magnetic force toward the coil assembly 160, the control sensitivity increases further. That is, if the inner yoke 172 is not present, lines of magnetic force travelling from the N pole to the S pole of the respective magnets 150 and lines of magnetic force passing a portion of the focus coil 161 which is not an effective coil are strengthened so that an efficiency in control is lowered. However, when the inner yoke 172 is installed as in the present invention, the lines of magnetic force are concentrated in a direction to pass the effective coil and the other unnecessary components are weakened, so that the control sensitivity is increased further. Thus, although different coils are incorporated into the one coil assembly 160 and arranged in a narrow space, the effective length used for control is greater than that according to the conventional technology.

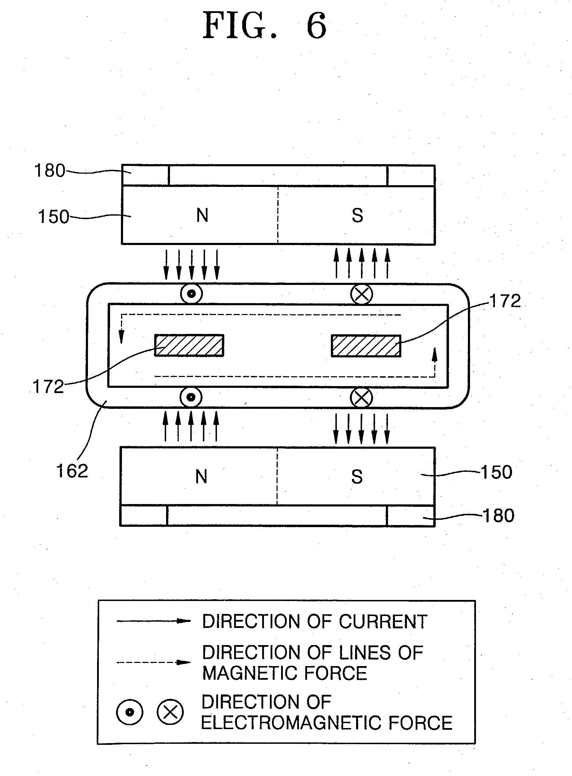

Next, when the blade 120 is driven in the tilt direction, current is supplied to the tilt coil 162 as shown in Figure 6. Then, by the interaction with the magnets 150, electromagnetic forces are generated in an ascending direction at the left side of the drawing and in a descending direction at the right side of the drawing so that the blade 120 is rotated in the tilt direction. To rotate the blade 120 in the opposite direction, current is supplied in the opposite direction. In this case, it can be seen that the effective length of the coil is extended. That is, in the conventional technology, one side surface of each of the tilt coils 15a and 15b is disposed between the magnets 14a and 14b which are magnetic members and the steel wires 17a and 17b, as shown in Figure 2. However, in the present invention, since the front and rear surfaces of the tilt coil 162 facing the magnet 150 act as effective coils, the control sensitivity can be improved.

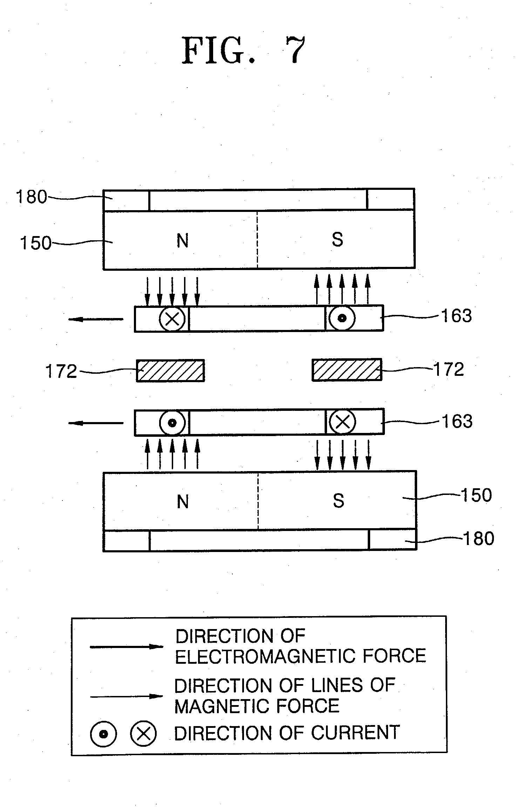

Also, tracking control uses the electromagnetic force generated by the interaction between the current flowing in the tracking coil 163 and the magnet 150. Thus, when current flows in the tracking coil 163 as shown in Figure 7, an electromagnetic force is generated in the left direction on the drawing by the interaction with the magnet 150. If the current flows in the opposite direction, the electromagnetic force is formed in the opposite direction. Thus, when the blade 120 is driven by the electromagnetic force, tracking control is performed. In this case, since the respective vertical surfaces of the tracking coil 163 attached to both sides of the deposited focus coil 161 and the tilt coil 162 are used as an effective coil reacting on the polarized magnet 150, an effective length of the coil extends compared with the conventional technology in which the tracking coil 4 is installed on one side of the focus coil 3, as shown in Figure 1. Thus, the control sensitivity can be improved in the tracking control.

In the present invention, since the focus coil 161, the tilt coil 162, and the tracking coil 163 are incorporated into the coil assembly 160 and arranged in a limited space between the magnets 150, an installation space can be reduced much. Also, although the installation space is limited, en effective length of a coil used for control of the respective coils is extended so that the control sensitivity can be improved.

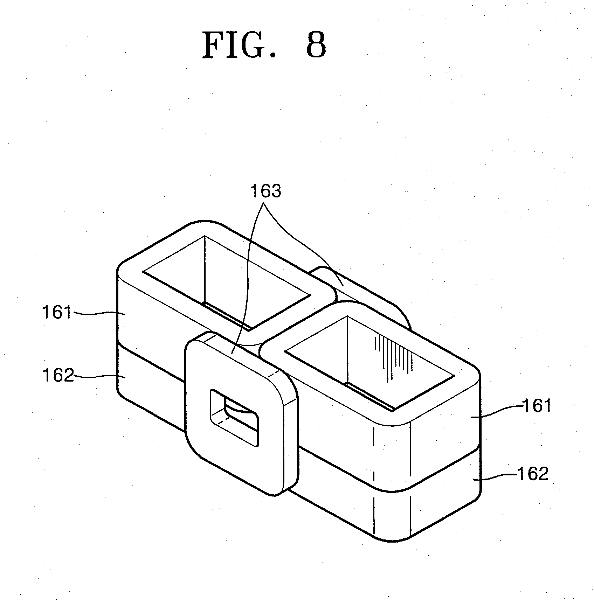

In the above-described preferred embodiment, as the structure of the coil assembly 160, the focus coil 161 is deposited on each of the upper and lower sides of the tilt coil 162 and the tracking coil 163 is attached on both side surfaces thereof. Different from the above structure, as shown in Figure 8, the focus coil 161 can be installed on only one of the upper and lower sides of the tilt coil 162 and the tracking coil 163 is attached to each of both sides thereof.

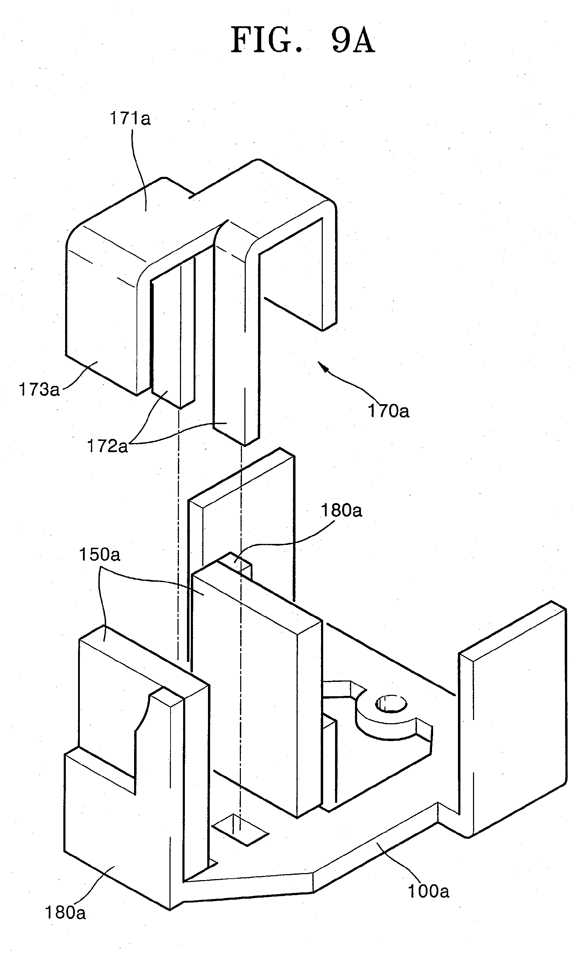

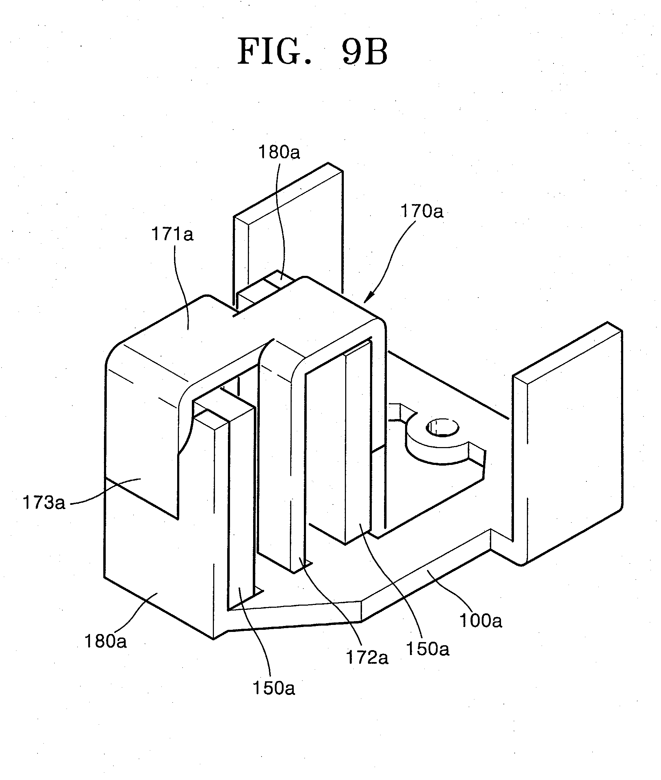

Also, the structure of the top cover 170 can be modified into a variety of shapes as shown in Figures 9A through 10A. That is, although the top cover 170 includes the top yoke 171 and the inner yoke 172 in the preferred embodiment shown in Figure 3, it may further include a partial outer yoke 173a as shown in Figures 9A and 9B. In this case, a first partial outer yoke 180a provided on a base 100a supports a magnet 150a and, when an inner yoke 172a of a top cover 170a is coupled to the base 100a, a second partial outer yoke 173a extending from the top yoke 171a of the top cover 170a is coupled to the first partial outer yoke 180a of the base 100a so as to support the magnet 150a.

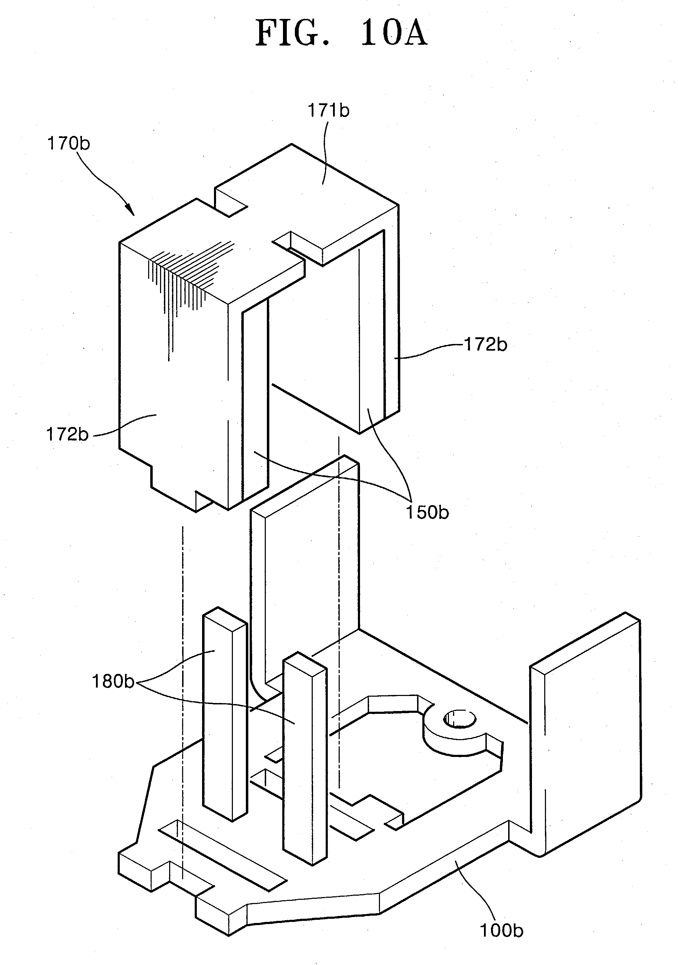

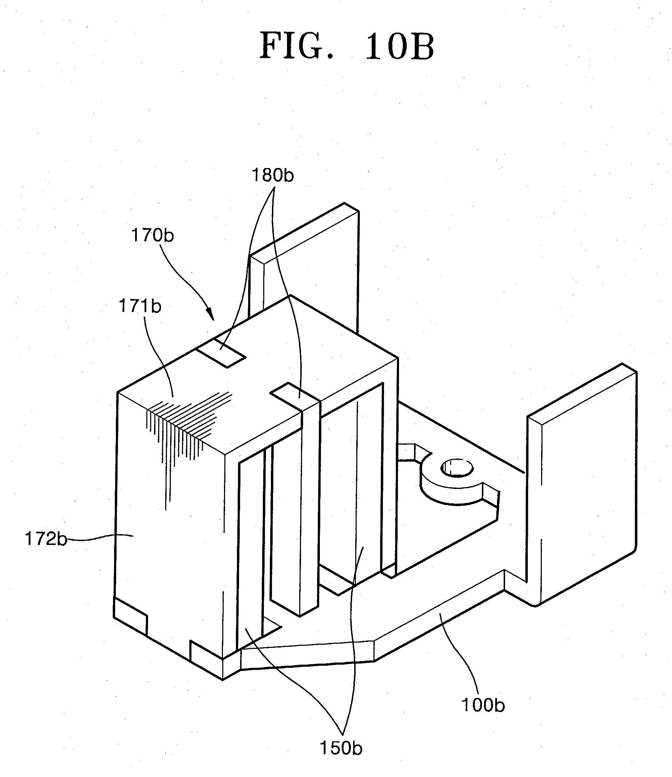

Further, as shown in Figures 10A and 10B, an inner yoke 180b is provided on a base 100b, and a top yoke 171b and an outer yoke 172b to which a magnet 150b is fixed are provided on a top cover 170b, so that the top cover 170b is coupled to the base 100b. In any case, the magnets 150, 150a, and 150b polarized into two poles are adopted so as to produce a very effective control sensitivity together with the coil assembly 160 arranged in the limited small space between a pair of the polarized magnets.

As described above, the objective lens driving apparatus of an optical pickup according to embodiments of the present invention has the following advantages.

First, since coils needed to change the position of an objective lens such as a focus coil, a tilt coil, and a tracking coil are incorporated into a single coil assembly and arranged between a pair of magnets, an installation space is small so that the apparatus can be made compact.

Second, the control sensitivity can be improved by extending an effective length of a coil by appropriately matching the magnet polarized into two poles and the coil assembly.

Third, since the respective coils in the coil assembly are arranged to interact with the magnets polarized into two poles, an additional magnet for the tilt coil is not needed unlike in the conventional technology so that the driving portion can be made lightweight.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An objective lens driving apparatus for an optical pickup, comprising:
a base (100);
a holder (110) provided on the base (100);
a blade (120) on which an objective lens (130) is mounted;
an elastic support body (140) elastically supporting the blade (120) capable of moving with respect to the holder (110);
a pair of magnetic members (150) installed on the base (100) to face each other; and
a coil assembly (160) including a focus coil (161), a tracking coil (163), and a tilt coil (162) and installed at the blade (120) so as to be disposed between the magnetic members (150).

2. The apparatus as claimed in claim 1, wherein, in the coil assembly (160), the tilt coil (162) and the focus coil (161) are placed in the upper and lower portions of the coil assembly (160) and the tracking coil (163) is attached to a side surface of the tilt and focus coils (161, 162).

3. The apparatus as claimed in claim 1, further comprising:
a pair of outer yokes (180) provided on the base (100) to fixedly support the magnetic members (150); and
a top cover (170) including an inner yoke (172) fixed to the base by penetrating the center of the coil assembly and a top yoke (171) contacting top ends of the outer yokes (180) from the coil assembly (160).

4. The apparatus as claimed in claim 1, further comprising:
a top cover (170) coupled to the base (100b) and including a top yoke (171b) disposed above the coil assembly (160) and a pair of outer yokes (172b) provided such that the magnetic members (150b) are fixed to both end sides of the top yoke (171b); and
an inner yoke (180b) provided on the base to penetrate the center of the coil assembly (160).

5. The apparatus as claimed in claim 1, further comprising:
a first partial outer yoke (180a) provided on the base (100a) by which part of the magnetic members (150) is fixedly supported; and
a top cover (170a) coupled to the base (100a) and including an inner yoke (172a) fixed to the base (100a) by penetrating the center of the coil assembly (160), a top yoke (171b) disposed above the coil assembly (160), and a second partial outer yoke (173a) extending from the top yoke (171a) and coupled to the first partial outer yoke (180a), forming an entire outer yoke by which the magnetic members (150) are fixedly supported.

6. The apparatus as claimed in claim 1, wherein the coil assembly (160) is installed at the center of gravity of the blade (120).
